# EUROPEAN PATENT SPECIFICATION

(11) **EP 2 866 425 B1**
(45) Date of publication and mention of the grant of the patent: **12.02.2020**
(21) Application number: 13807524.7
(22) Date of filing: 06.06.2013
(51) Int. Cl.: H04L 12/58, H04M 1/725

(54) **MOBILE DEVICE COMMUNICATION METHOD, APPARATUS AND COMMUNICATION SYSTEM**
KOMMUNIKATIONSSYSTEM, VORRICHTUNG UND KOMMUNIKATIONSVERFAHREN FÜR EINE MOBILE VORRICHTUNG
PROCÉDÉ DE COMMUNICATION DE DISPOSITIFS MOBILES, APPAREIL ET SYSTÈME DE COMMUNICATION

(30) Priority: 20.06.2012 CN 201210205224
(43) Date of publication of application: 29.04.2015
(60) Divisional application: 19211269.6
(73) Proprietor: Tencent Technology (Shenzhen) Company Limited, Shenzhen, Guangdong 518044 (CN)
(72) Inventor: HUANG, Yaode, Shenzhen Guangdong 518044 (CN); CHEN, Lin, Shenzhen Guangdong 518044 (CN); JIANG, Peng, Shenzhen Guangdong 518044 (CN)
(74) Representative: Boult Wade Tennant LLP
(86) International application number: PCT/CN2013/076869
(87) International publication number: WO 2013/189243

(56) References cited:
- WO-A1-2006/013363
- CN-A- 1 607 829
- CN-A- 1 735 240
- CN-A- 101 305 416
- CN-A- 101 741 953
- CN-A- 102 271 096
- CN-A- 102 387 241
- CN-A- 102 387 241

## Description

### FIELD OF THE INVENTION

The invention relates to the field of communication technology, and particularly, to a communication method, apparatus and system for mobile devices.

### BACKGROUND

As the development of communication technology, mobile devices such as mobile phones and tablets etc. have more and more functions. A user not only can dial telephone numbers, make voice calls and send text messages with a mobile device; but also can make text, image, emoticon communication through chat tools within the mobile device. Currently, when communicating through a mobile device, if text communication is needed to be realized, then an input method may be opened firstly to input characters such as Pinyin so as to obtain words to which the Pinyin corresponds, from where the needed word input is then selected; and if emoticon communication is needed to be realized, then a pre-saved emoticon set may be opened, from where corresponding emoticons are selected for input.

However, in procedure of realizing the present invention, the inventor found that: when making a call through a mobile device, if text communication is needed to be realized, then a user has to make plurality of steps (e.g., opening, selecting, inputting, etc), calling operation of a mobile device is complex, and communication efficiency of a mobile device is low.

CN 102 387 241 A discloses a mobile terminal and a transmission processing method thereof, which are capable of implementing user input operations with reduced complexity and improved efficiency. WO 2006/013363 A1 discloses a mobile communication network, terminals including motion sensors and pressure sensors for use with the mobile communication network, and a method of operating the mobile communication network.

### SUMMARY OF THE INVENTION

An embodiment of the present invention provides a communication method, apparatus and system for mobile devices; the technical solutions are as follows:
According to a first aspect of embodiments of the present disclosure, a communication method for mobile devices is provided, including: obtaining additional instruction information that corresponds to a first user operation during communication by sensing the first user operation; the first user operation comprises at least one of a voice-activated operation or a one-step operation on a first mobile device; and transmitting the additional instruction information to a second mobile device, so that the second mobile device recognizes the additional instruction information to further notify a second user of the second mobile device of the first user operation. Transmitting the additional instruction information to the second mobile device includes: inquiring pre-stored first correspondence between additional instruction information and encoding information of the additional instruction information, to obtain the encoding information to which the additional instruction information corresponds, wherein when the additional instruction information is an emoticon, the emoticon is encoded differently from existing emoticons by defining a new set of emoticon fields and establishing a new set of correspondence between the emoticon and the encoding of the emoticon to define a marker start byte; and transmitting the encoding information of the additional instruction information to the second mobile device.

According to a second aspect of embodiments of the present disclosure, a communication apparatus for mobile devices is provided, including: an acquisition module for obtaining additional instruction information that corresponds to a first user operation during communication by sensing the first user operation; the first user operation comprises at least one of a voice-activated operation or a one-step operation on a first mobile device; and a transmitting module for transmitting the additional instruction information to a second mobile device so that the second mobile device recognizes the additional instruction information to further notify a second user of the second mobile device of the first user operation, after the acquisition module obtains the additional instruction information that corresponds to a first user operation. The transmitting module includes: a first querying unit for inquiring pre-stored first correspondence between the additional instruction information and encoding information of additional instruction information, to obtain the encoding information to which the additional instruction information corresponds, wherein when the additional instruction information is an emoticon, the emoticon is encoded differently from existing emoticons by defining a new set of emoticon fields and establishing a new set of correspondence between the emoticon and the encoding of the emoticon to define a marker start byte; and a transmitting unit for transmitting the encoding information of the additional instruction information to the second mobile device, so as to make a second mobile device to: receive the encoding information of the additional instruction information, inquire pre-stored second correspondence between additional instruction information and encoding information of additional instruction information, to obtain the encoding information to which the additional instruction information corresponds; and recognize the additional instruction information to further notify a second user of the second mobile device of the first user operation.

According to a third aspect of embodiments of the present disclosure, a recording medium readable by a computer and having recorded thereon a computer program is provided. The computer program includes instructions for executing the steps of the above communication method for mobile devices.

The technical solution provided by the embodiments of the invention at least has the following benefits:
It may obtain additional instruction information that corresponds to a first user operation during communication by sensing the first user operation; transmit the additional instruction information to a second mobile device, such that only a voice-activated operation or a one-step operation is needed to be perform on the mobile device to obtain the additional instruction information; it does not need a user to open selections for input, it operations are simple and convenient and may improve communication efficiency of mobile devices.

### DESCRIPTION OF THE DRAWINGS

In order to describe the technical solutions of the invention apparently, the invention will be further illustrated in brief in connection with accompanying figures hereinafter. It should be appreciated that the figures described herein are only some embodiments of the invention, and a person skilled in the art may obtain other figures based on theses ones without any creative effort being paid.
Fig. 1 is a flow diagram of a communication method for mobile devices provided by embodiment 1 of the present application;
Fig. 2 is a flow diagram of a communication method for mobile devices provided by embodiment 2 of the present application;
Fig. 3 is a structure schematic diagram of a communication apparatus for mobile devices provided by embodiment 3 of the present application; and
Fig. 4 is a structure schematic diagram of a communication system for mobile devices provided by embodiment 4 of the present application.

### DETAILED DESCRIPTION

In order to make the objects, technical solutions and advantages of the invention more apparent, the invention will be further illustrated in details in connection with accompanying figures and embodiments hereinafter. The invention is defined in the independent claims, embodiments not relating to the use of emoticons are not part of the claimed invention.

### Embodiment 1

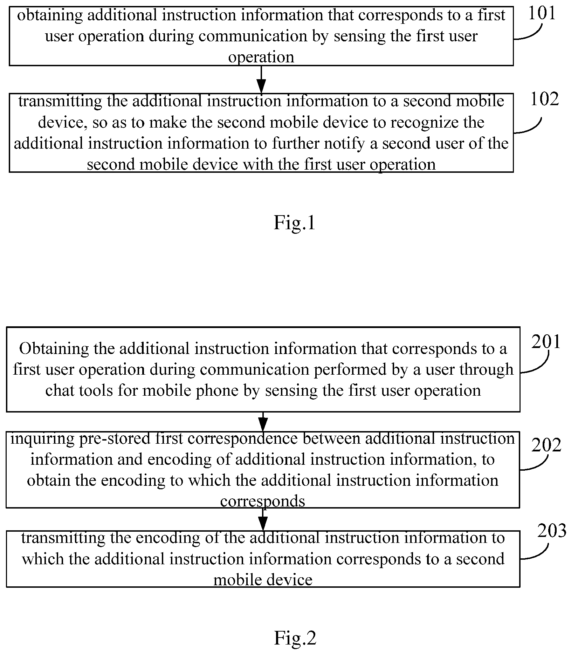

See Fig.1, embodiment of the present invention provides a communication method for mobile devices.

At step S101, additional instruction information that corresponds to a first user operation is obtained during communication by sensing the first user operation; the first user operation comprises at least one of a voice-activated operation or a one-step operation on a first mobile device.

At step S102, the additional instruction information is transmitted to a second mobile device, so that the second mobile device recognizes the additional instruction information to further notify a second user of the second mobile device of the first user operation.

Further, transmitting the additional instruction information to the second mobile device comprises:
inquiring pre-stored first correspondence between additional instruction information and encoding information of additional instruction information, to obtain the encoding information to which the additional instruction information corresponds;
transmitting the encoding information of the additional instruction information to the second mobile device.

Accordingly, recognizing, by the second mobile device, the additional instruction information to further notify a second user of the second mobile device of the first user operation comprises:
receiving, by the second mobile device, the encoding information of the additional instruction information
inquiring, by the second mobile device, pre-stored second correspondence between additional instruction information and encoding information of additional instruction information, to obtain the encoding information to which the additional instruction information corresponds;
recognizing, by the second mobile device, the additional instruction information to further notify a second user of the second mobile device of the first user operation.

Further, the one-step operation on the first mobile device comprises:
a one-step operation on a screen of the first mobile device, or
a one-step operation on the first mobile device itself.

The communication method for mobile devices described in embodiments of the invention may obtain additional instruction information that corresponds to a first user operation during communication by sensing the first user operation; transmit the additional instruction information to a second mobile device, such that only a voice-activated operation or a one-step operation is needed to be perform on the mobile device to obtain the additional instruction information; it does not need a user to open selections for input, it operations are simple and convenient and may improve communication efficiency of mobile devices. By inquiring pre-stored first correspondence between additional instruction information and encoding information of additional instruction information, the additional instruction information is transmitted to the second mobile device in manner of its encoding, its implementation is simple and convenient and may further improve communication efficiency of mobile devices.

The communication method for mobile devices described in embodiments of the invention may be applied to various mobile devices such as mobile phones. Next it would be further described by taking a chat tool applied to a mobile phone as an example.

### Embodiment 2

See Fig.2, embodiment of the present invention provides a communication method for mobile devices.

At step S201, additional instruction information that corresponds to a first user operation is obtained during communication performed by a user through chat tools for mobile phone by sensing the first user operation; the first user operation comprises at least one of a voice-activated operation or a one-step operation on a first mobile device.

Wherein the one-step operation on the first mobile device comprises a one-step operation on a screen of the mobile phone or a one-step operation on the mobile phone itself; such as knocking on screen of a mobile phone, kissing on screen of a mobile phone, shaking a mobile phone itself and etc. For additional instruction information that corresponds to the first user operation, specifically, additional instruction information (including text, emoticon, or image, etc) to which each kind of user operation corresponds may be pre-set; for example, an operation of knocking on screen of a mobile phone may be set to correspond to a ringtone of knocking (or doorbell), an operation of kissing on screen of a mobile phone may be set to correspond to a an emoticon of kissing, an operation of shaking a mobile phone itself may be set to correspond to a an effect of vibration, and so on. A correspondence is established between user operations and additional instruction information, further, the correspondence between user operations and additional instruction information may be specifically stored in manner of form or data set, which would not be further defined herein.

It should be noted that in procedure of realizing the present invention, when making a call through a mobile device, if text, image or emoticon communication is needed to be realized, then a user has to make plurality of steps. In contrary, a user only needs knock on screen of a mobile phone, kiss on screen of a mobile phone, or shake a mobile phone itself to realize text, image or emoticon communication. For the convenience of distinguishing operations to mobile devices in the invention from those in the prior art, an operation on a mobile device in the prior art (such as opening, selecting and inputting) are referred to as a multi-steps operation, and an operation on a mobile device in the invention are referred to as a one-step operation.

Additional instruction information that corresponds to a first user operation is obtained by sensing the first user operation, specifically; it may be implemented by technology of Multi-Touch, gravity sensing, light sensing, airflow sensing and other technologies. For example, an operation of knocking on screen of a mobile phone may be sensed by technology of Multi-Touch, an operation of kissing on screen of a mobile phone may be sensed by technology of airflow sensing, an operation of shaking a mobile phone itself may be sensed by technology of gravity sensing.

At step S202, pre-stored first correspondence between additional instruction information and encoding information of additional instruction information is inquired, to obtain the encoding information to which the additional instruction information corresponds.

Specifically, encoding information of additional instruction information to which each kind of additional instruction information corresponds may be pre-set; for example, encoding of a ringtone of knocking (or doorbell) may be set as 1001, encoding of an emoticon of kissing may be set as 1002, and so on. Further, the correspondence between encoding information of additional instruction information and additional instruction information may be specifically stored in manner of form or data set, which would not be further defined herein.

It should be illustrated that when the additional instruction information obtained by a method of the invention is an emoticon, then in order to distinguish it from emoticons in the existing chat tools (may be referred to as "normal emoticons"), encodings of emoticons obtained by a method of the invention (may be referred to as "special emoticons") are set to be different with encodings of emoticons in the existing chat tools. Specifically, a new set of special emoticons fields may be defined, for example, emoticons in the existing chat tools starts with bytes of 0x14, then special emoticons may define new start bytes; establish a set of special correspondence between special emoticons and encodings to define a marker start byte (usually an invisible byte to avoid a user from inputting an identical byte).

It should be also illustrated that the first correspondence between encoding information of additional instruction information and additional instruction information may be stored in the first mobile device directly, or it may be stored in a server, no definition would be made herein. According to different storage locations of correspondence between encoding information of additional instruction information and additional instruction information, optionally, inquiring pre-stored first correspondence between additional instruction information and encoding information of additional instruction information, to obtain the encoding information to which the additional instruction information corresponds, comprising: locally inquiring pre-stored first correspondence between additional instruction information and encoding information of additional instruction information, to obtain the encoding information to which the additional instruction information corresponds, or inquiring a first server for pre-stored first correspondence between additional instruction information and encoding information of additional instruction information, to obtain the encoding information to which the additional instruction information corresponds.

At step S203, the encoding information of the additional instruction information to which the additional instruction information corresponds is transmitted to a second mobile device.

Specifically, the encoding is not limited to be transmitted to one mobile device, it may also be transmitted to a plurality of mobile devices.

It should be illustrated that after transmitting the encoding information of the additional instruction information to which the additional instruction information corresponds to the second mobile device, the method further comprises:
receiving, by the second mobile device, the encoding information of the additional instruction information
inquiring, by the second mobile device, pre-stored second correspondence between additional instruction information and encoding information of additional instruction information, to obtain the encoding information to which the additional instruction information corresponds;
recognizing, by the second mobile device, the additional instruction information to further notify a second user of the second mobile device of the first user operation.

It should be illustrated that the second correspondence between encoding information of additional instruction information and additional instruction information may be stored in the first mobile device directly, or it may be stored in a server. If the first correspondence between encoding information of additional instruction information and additional instruction information, and the second correspondence between encoding information of additional instruction information and additional instruction information are both stored in a same server, then the second correspondence between encoding information of additional instruction information and additional instruction information may not be set and the first correspondence between encoding information of additional instruction information and additional instruction information may be employed directly. Thus optionally, inquiring, by the second mobile device, pre-stored second correspondence between additional instruction information and encoding information of additional instruction information, to obtain the encoding information to which the additional instruction information corresponds comprises: inquiring the second server, by the second mobile device, for pre-stored second correspondence between additional instruction information and encoding information of additional instruction information to obtain the encoding information to which the additional instruction information corresponds, or locally inquiring, by the second mobile device, pre-stored second correspondence between additional instruction information and encoding information of additional instruction information, to obtain the encoding information to which the additional instruction information corresponds. Wherein the first server and the second server may be one same server or be different servers, which would not be specifically defined in this embodiment.

It should be also illustrated that transmitting the encoding information of additional instruction information, to obtain the encoding information to which the additional instruction information corresponds to the second mobile device may specifically be:
transmitting the encoding information to which the additional instruction information corresponds to the server, and then the transmitting, by the server, the encoding information of additional instruction information to the second mobile device.

Further, upon the encoding information to which the additional instruction information corresponds is transmitted to the server, the server may convert the encoding information of additional instruction information into server unified coding sequence number for additional instruction information, then the server transmits the server unified coding sequence number for additional instruction information to the second mobile device. Accordingly, upon receiving the server unified coding sequence number for additional instruction information, the second mobile device needs to inquire pre-stored additional instruction information and unified coding sequence number for additional instruction information to obtain the additional instruction information.

The communication method for mobile devices described in embodiments of the invention may obtain additional instruction information that corresponds to a first user operation during communication by sensing the first user operation; transmit the additional instruction information to a second mobile device, such that only a voice-activated operation or a one-step operation is needed to be perform on the mobile device to obtain the additional instruction information; it does not need a user to open selections for input, it operations are simple and convenient and may improve communication efficiency of mobile devices. By inquiring pre-stored first correspondence between additional instruction information and encoding information of additional instruction information, the additional instruction information is transmitted to the second mobile device in manner of its encoding, its implementation is simple and convenient and may further improve communication efficiency of mobile devices.

### Embodiment 3

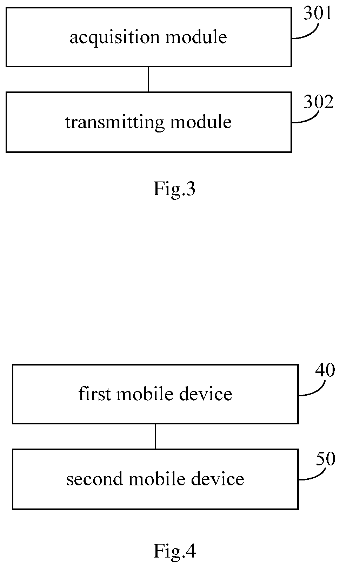

See Fig.3, embodiment of the present invention provides a communication apparatus for mobile devices, the apparatus comprises:
an acquisition module 301 for obtaining additional instruction information that corresponds to a first user operation during communication by sensing the first user operation; the first user operation comprises at least one of a voice-activated operation or a one-step operation on a first mobile device;
a transmitting module 302, for transmitting the additional instruction information to a second mobile device so that the second mobile device recognizes the additional instruction information to further notify a second user of the second mobile device of the first user operation, after the acquisition module 301 obtains the additional instruction information that corresponds to a first user operation.

Further, the transmitting module 302 comprises:
a first querying unit for inquiring pre-stored first correspondence between additional instruction information and encoding information of additional instruction information, to obtain the encoding information to which the additional instruction information corresponds;
a transmitting unit for transmitting the encoding information of the additional instruction information to the second mobile device, so as to make a second mobile device to: receive the encoding information of the additional instruction information, inquire pre-stored second correspondence between additional instruction information and encoding information of additional instruction information, to obtain the encoding information to which the additional instruction information corresponds; and recognize the additional instruction information to further notify a second user of the second mobile device of the first user operation.

Further, the one-step operation on the first mobile device comprises:
a one-step operation on a screen of the first mobile device, or
a one-step operation on the first mobile device itself.

The communication apparatus for mobile devices described in embodiments of the invention may obtain additional instruction information that corresponds to a first user operation during communication by sensing the first user operation; transmit the additional instruction information to a second mobile device, such that only a voice-activated operation or a one-step operation is needed to be perform on the mobile device to obtain the additional instruction information; it does not need a user to open selections for input, it operations are simple and convenient and may improve communication efficiency of mobile devices. By inquiring pre-stored first correspondence between additional instruction information and encoding information of additional instruction information, the additional instruction information is transmitted to the second mobile device in manner of its encoding, its implementation is simple and convenient and may further improve communication efficiency of mobile devices.

### Embodiment 4

See Fig.4, embodiment of the present invention provides a communication system for mobile devices; the system comprises a first mobile device 40 and a second mobile device 50.

The first mobile device 40 comprises:
an acquisition module for obtaining additional instruction information that corresponds to a first user operation during communication by sensing the first user operation; the first user operation comprises at least one of a voice-activated operation or a one-step operation on a first mobile device;
a transmitting module for transmitting the additional instruction information to a second mobile device after the acquisition module obtains the additional instruction information that corresponds to a first user operation.

The second mobile device 50 comprises:
a processing module for receiving the additional instruction information transmitted by the transmitting module, and recognizing the additional instruction information to further notify a second user of the second mobile device of the first user operation.

Further, the transmitting module 302 comprises:
a first querying unit for inquiring pre-stored first correspondence between additional instruction information and encoding information of additional instruction information, to obtain the encoding information to which the additional instruction information corresponds;
a transmitting unit for transmitting the encoding information of the additional instruction information to the second mobile device, after the first querying unit obtains the encoding information to which the additional instruction information corresponds.

Accordingly, the processing module comprises:
a receiving unit for receiving the additional instruction information transmitted by the transmitting module;
a second querying unit for inquiring pre-stored second correspondence between additional instruction information and encoding information of additional instruction information, to obtain the encoding information to which the additional instruction information corresponds;
a processing unit for recognizing the additional instruction information to further notify a second user of the second mobile device of the first user operation, after the second querying unit obtains the encoding information to which the additional instruction information corresponds.

The communication system for mobile devices described in embodiments of the invention may obtain additional instruction information that corresponds to a first user operation during communication by sensing the first user operation; transmit the additional instruction information to a second mobile device, such that only a voice-activated operation or a one-step operation is needed to be perform on the mobile device to obtain the additional instruction information; it does not need a user to open selections for input, it operations are simple and convenient and may improve communication efficiency of mobile devices. By inquiring pre-stored first correspondence between additional instruction information and encoding information of additional instruction information, the additional instruction information is transmitted to the second mobile device in manner of its encoding, its implementation is simple and convenient and may further improve communication efficiency of mobile devices.

Parts of all disclosure of the technical solution provided by the embodiments above may be implemented by software programming; the software program may be stored in readable storage medium such as hard drive, compact disc, floppy disk for computers.

## Claims

1. A communication method for mobile devices, **characterized by** comprising:
obtaining (101) additional instruction information that corresponds to a first user operation during communication by sensing the first user operation, the first user operation comprising at least one of a voice-activated operation or a one-step operation on a first mobile device;
transmitting (102) the additional instruction information to a second mobile device, so that the second mobile device recognizes the additional instruction information to further notify a second user of the second mobile device of the first user operation;
wherein transmitting (102) the additional instruction information to the second mobile device comprises:
inquiring (202) pre-stored first correspondence between additional instruction information and encoding information of the additional instruction information, to obtain the encoding information to which the additional instruction information corresponds, wherein when the additional instruction information is an emoticon, encoding of the emoticon is set to be different with encodings of emoticons in existing chat tools, by defining a new set of emoticon fields and establishing a new set of correspondence between the emoticon and the encoding of the emoticon to define a marker start byte; and
transmitting (203) the encoding information of the additional instruction information to the second mobile device.

2. The communication method for mobile devices according to claim 1, **characterized in that** inquiring (202) the pre-stored first correspondence between additional instruction information and encoding information of additional instruction information comprising:
locally inquiring pre-stored first correspondence between additional instruction information and encoding information of additional instruction information, to obtain the encoding information to which the additional instruction information corresponds, or
inquiring a first server for pre-stored first correspondence between additional instruction information and encoding information of additional instruction information, to obtain the encoding information to which the additional instruction information corresponds.

3. The communication method for mobile devices according to any one of claims 1-2, **characterized in that** after the additional instruction information is transmitted to the second mobile device, the communication method further comprises:
receiving, by the second mobile device, the encoding information of the additional instruction information;
inquiring, by the second mobile device, pre-stored second correspondence between the additional instruction information and the encoding information of additional instruction information, to obtain the encoding information to which the additional instruction information corresponds; and
recognizing, by the second mobile device, the additional instruction information to further notify a second user of the second mobile device of the first user operation.

4. The communication method for mobile devices according to claim 3, **characterized in that** inquiring, by the second mobile device, pre-stored second correspondence between additional instruction information and encoding information of additional instruction information, to obtain the encoding information to which the additional instruction information corresponds comprises:
locally inquiring, by the second mobile device, the pre-stored second correspondence between additional instruction information and encoding information of additional instruction information, to obtain the encoding information to which the additional instruction information corresponds, or
inquiring, by the second mobile device, a second server for the pre-stored second correspondence between additional instruction information and encoding information of additional instruction information, to obtain the encoding information to which the additional instruction information corresponds.

5. The communication method for mobile devices according to any one of claims 1-4, **characterized in that** the one-step operation on the first mobile device comprises:
a one-step operation on a screen of the first mobile device, or
a one-step operation on the first mobile device itself.

6. A communication apparatus for mobile devices, **characterized by** comprising:
an acquisition module (301) for obtaining additional instruction information that corresponds to a first user operation during communication by sensing the first user operation; the first user operation comprising at least one of a voice-activated operation or a one-step operation on a first mobile device; and
a transmitting module (302) for transmitting the additional instruction information to a second mobile device so that the second mobile device recognizes the additional instruction information to further notify a second user of the second mobile device of the first user operation, after the acquisition module obtains the additional instruction information that corresponds to the first user operation;
wherein the transmitting module (302) comprises:
a first querying unit for inquiring pre-stored first correspondence between the additional instruction information and encoding information of additional instruction information, to obtain the encoding information to which the additional instruction information corresponds, wherein when the additional instruction information is an emoticon, encoding of the emoticon is set to be different with encodings of emoticons in existing chat tools, by defining a new set of emoticon fields and, establishing a new set of correspondence between the emoticon and the encoding of the emoticon to define a marker start byte; and
a transmitting unit for transmitting the encoding information of the additional instruction information to the second mobile device, so as to make a second mobile device to: receive the encoding information of the additional instruction information, inquire pre-stored second correspondence between additional instruction information and encoding information of additional instruction information, to obtain the encoding information to which the additional instruction information corresponds; and recognize the additional instruction information to further notify a second user of the second mobile device of the first user operation.

7. The communication apparatus for mobile devices according to claim 6, **characterized in that** the first querying unit is further configured to:
locally inquire the pre-stored first correspondence between the additional instruction information and encoding information of the additional instruction information, to obtain the encoding information to which the additional instruction information corresponds, or
inquire a first server for the pre-stored first correspondence between additional instruction information and encoding information of additional instruction information, to obtain the encoding information to which the additional instruction information corresponds.

8. The communication apparatus for mobile devices according to any one of claims 6-7, **characterized in that** the one-step operation on the first mobile device comprises:
a one-step operation on a screen of the first mobile device, or
a one-step operation on the first mobile device itself.

9. A recording medium readable by a computer and having recorded thereon a computer program including instructions for executing the steps of the communication method for mobile devices according to any one of claims 1 to 5.

## Patentansprüche

1. Kommunikationsverfahren für mobile Endgeräte, **gekennzeichnet durch** die Schritte:
Gewinnen (101) von zusätzlicher Befehlsinformation, die einer ersten Benutzerbetätigung während der Kommunikation entspricht, durch Erfassen der ersten Benutzerbetätigung, wobei die erste Benutzerbetätigung eine sprachaktivierte Betätigung und/oder eine einschrittige Betätigung auf einem ersten mobilen Endgerät umfasst;
Senden (102) der zusätzlichen Befehlsinformation an ein zweites mobiles Endgerät, so dass das zweite mobile Endgerät die zusätzliche Befehlsinformation erkennt, um ferner einen zweiten Benutzer über das zweite mobile Endgerät über die erste Benutzerbetätigung zu informieren;
wobei das Senden (102) der zusätzlichen Befehlsinformation an das zweite mobile Endgerät umfasst:
Abfragen (202) einer vorab gespeicherten ersten Entsprechung zwischen zusätzlicher Befehlsinformation und Kodierungsinformation der zusätzlichen Befehlsinformation, um die Kodierungsinformation zu erhalten, der die zusätzliche Befehlsinformation entspricht, wobei, wenn die zusätzliche Befehlsinformation ein Emoticon ist, die Kodierung des Emoticons so eingestellt ist, dass sie sich von der Kodierung von Emoticons in bestehenden Chat-Tools unterscheidet, indem ein neuer Satz von Emoticon-Feldern definiert wird und ein neuer Satz von Entsprechungen zwischen dem Emoticon und der Kodierung des Emoticons erstellt wird, um ein Markierungsstartbyte zu definieren;
und
Senden (203) der Kodierungsinformation der zusätzlichen Befehlsinformation an das zweite mobile Endgerät.

2. Kommunikationsverfahren für mobile Endgeräte nach Anspruch 1,
**dadurch gekennzeichnet, dass** das Abfragen (202) der vorab gespeicherten ersten Entsprechung zwischen zusätzlicher Befehlsinformation und Kodierungsinformation von zusätzlicher Befehlsinformation umfasst:
lokales Abfragen einer vorab gespeicherten ersten Entsprechung zwischen zusätzlicher Befehlsinformation und Kodierungsinformation der zusätzlichen Befehlsinformation, um die Kodierungsinformation zu erhalten, der die zusätzliche Befehlsinformation entspricht, oder
Abfragen eines ersten Servers nach einer vorab gespeicherten ersten Entsprechung zwischen zusätzlicher Befehlsinformation und Kodierungsinformation von zusätzlicher Befehlsinformation, um die Kodierungsinformation zu erhalten, der die zusätzliche Befehlsinformation entspricht.

3. Kommunikationsverfahren für mobile Endgeräte nach einem der Ansprüche 1-2, **dadurch gekennzeichnet, dass** das Kommunikationsverfahren nach dem Senden der zusätzlichen Befehlsinformation an das zweite mobile Endgerät ferner umfasst:
Empfangen der Kodierungsinformation der zusätzlichen Befehlsinformation durch das zweite mobile Endgerät;
Abfragen einer vorab gespeicherten zweiten Entsprechung zwischen der zusätzlichen Befehlsinformation und der Kodierungsinformation von zusätzlicher Befehlsinformation durch das zweite mobile Endgerät, um die Kodierungsinformation zu erhalten, der die zusätzliche Befehlsinformation entspricht; und
Erkennen der zusätzlichen Befehlsinformation durch das zweite mobile Endgerät, um ferner einen zweiten Benutzer über das zweite mobile Endgerät über die erste Benutzerbetätigung zu informieren.

4. Kommunikationsverfahren für mobile Endgeräte nach Anspruch 3,
**dadurch gekennzeichnet, dass** das Abfragen einer vorab gespeicherten zweiten Entsprechung zwischen zusätzlicher Befehlsinformation und Kodierungsinformation von zusätzlicher Befehlsinformation durch das zweite mobile Endgerät, um die Kodierungsinformation zu erhalten, der die zusätzliche Befehlsinformation entspricht, umfasst:
lokales Abfragen der vorab gespeicherten zweiten Entsprechung zwischen zusätzlicher Befehlsinformation und Kodierungsinformation von zusätzlicher Befehlsinformation durch das zweite mobile Endgerät, um die Kodierungsinformation zu erhalten, der die zusätzliche Befehlsinformation entspricht, oder
Abfragen eines zweiten Servers nach der vorab gespeicherten zweiten Entsprechung zwischen zusätzlicher Befehlsinformation und Kodierungsinformation von zusätzlicher Befehlsinformation durch das zweite mobile Endgerät, um die Kodierungsinformation zu erhalten, der die zusätzliche Befehlsinformation entspricht.

5. Kommunikationsverfahren für mobile Endgeräte nach einem der Ansprüche 1-4, **dadurch gekennzeichnet, dass** die einschrittige Betätigung auf dem ersten mobilen Endgerät umfasst:
eine einschrittige Betätigung auf einem Bildschirm des ersten mobilen Endgeräts oder
eine einschrittige Betätigung auf dem ersten mobilen Endgerät selbst.

6. Kommunikationsvorrichtung für mobile Endgeräte, **dadurch gekennzeichnet, dass** sie umfasst:
ein Erfassungsmodul (301) zum Gewinnen zusätzlicher Befehlsinformation, die einer ersten Benutzerbetätigung während der Kommunikation entspricht, durch Erfassen der ersten Benutzerbetätigung; wobei die erste Benutzerbetätigung eine sprachaktivierte Betätigung und/oder eine einschrittige Betätigung auf einem ersten mobilen Endgerät umfasst; und
ein Sendemodul (302) zum Senden der zusätzlichen Befehlsinformation an ein zweites mobiles Endgerät, so dass das zweite mobile Endgerät die zusätzliche Befehlsinformation erkennt, um ferner einen zweiten Benutzer des zweiten mobilen Endgeräts über die erste Benutzerbetätigung zu informieren, nachdem das Erfassungsmodul die zusätzliche Befehlsinformation erhalten hat, die der ersten Benutzerbetätigung entspricht;
wobei das Sendemodul (302) umfasst:
eine erste Abfrageeinheit zum Abfragen der vorab gespeicherten ersten Entsprechung zwischen der zusätzlichen Befehlsinformation und der Kodierungsinformation der zusätzlichen Befehlsinformation, um die Kodierungsinformation zu erhalten, der die zusätzliche Befehlsinformation entspricht, wobei, wenn die zusätzliche Befehlsinformation ein Emoticon ist, die Kodierung des Emoticons so eingestellt ist, dass sie sich von der Kodierung von Emoticons in bestehenden Chat-Tools unterscheidet, indem ein neuer Satz von Emoticon-Feldern definiert wird, und ein neuer Satz von Entsprechungen zwischen dem Emoticon und der Kodierung des Emoticons erstellt wird, um ein Markierungsstart-Byte zu definieren; und
eine Sendeeinheit zum Senden der Kodierungsinformation der zusätzlichen Befehlsinformation an das zweite mobile Endgerät, um ein zweites mobiles Endgerät zu veranlassen,
die Kodierungsinformation der zusätzlichen Befehlsinformation zu empfangen,
eine vorab gespeicherte zweite Entsprechung zwischen zusätzlicher Befehlsinformation und Kodierungsinformation von zusätzlicher Befehlsinformation abzufragen, um die Kodierungsinformation zu erhalten, der die zusätzliche Befehlsinformation entspricht; und
die zusätzliche Befehlsinformation zu erkennen, um ferner einen zweiten Benutzer über das zweite mobile Endgerät über die erste Benutzerbetätigung zu informieren.

7. Kommunikationsvorrichtung für mobile Endgeräte nach Anspruch 6,
**dadurch gekennzeichnet, dass** die erste Abfrageeinheit ferner konfiguriert ist zum:
lokalen Abfragen der vorab gespeicherten ersten Entsprechung zwischen der zusätzlichen Befehlsinformation und der Kodierungsinformation der zusätzlichen Befehlsinformation, um die Kodierungsinformation zu erhalten, der die zusätzliche Befehlsinformation entspricht, oder
Abfragen eines ersten Servers nach der vorab gespeicherten ersten Entsprechung zwischen zusätzlicher Befehlsinformation und Kodierungsinformation von zusätzlicher Befehlsinformation, um die Kodierungsinformation zu erhalten, der die zusätzliche Befehlsinformation entspricht.

8. Kommunikationsvorrichtung für mobile Endgeräte nach einem der Ansprüche 6-7, **dadurch gekennzeichnet, dass** die einschrittige Betätigung auf dem ersten mobilen Endgerät umfasst:
eine einschrittige Betätigung auf einem Bildschirm des ersten mobilen Endgeräts oder
eine einschrittige Betätigung auf dem ersten mobilen Gerät selbst.

9. Computerlesbares Aufzeichnungsmedium, auf dem ein Computerprogramm aufgezeichnet ist, das Anweisungen zum Ausführen der Schritte des Kommunikationsverfahrens für mobile Endgeräte nach einem der Ansprüche 1 bis 5 enthält.

## Revendications

1. Procédé de communication pour dispositifs mobiles, **caractérisé en ce qu'**il comprend les étapes consistant :
à obtenir (101) des informations d'instruction supplémentaires qui correspondent à une première opération d'utilisateur au cours d'une communication en détectant la première opération d'utilisateur, la première opération d'utilisateur comprenant au moins l'une d'une opération à commande vocale ou d'une opération en une étape sur un premier dispositif mobile ;
à transmettre (102) les informations d'instruction supplémentaires à un deuxième dispositif mobile, de sorte que le deuxième dispositif mobile reconnaisse les informations d'instruction supplémentaires pour notifier en outre un deuxième utilisateur du deuxième dispositif mobile de la première opération d'utilisateur ;
dans lequel la transmission (102) des informations d'instruction supplémentaires au deuxième dispositif mobile comprend le fait :
de demander (202) une première correspondance pré-stockée entre des informations d'instruction supplémentaires et des informations de codage des informations d'instruction supplémentaires, pour obtenir les informations de codage auxquelles les informations d'instruction supplémentaires correspondent, où, lorsque les informations d'instruction supplémentaires représentent une émoticône, le codage de l'émoticône est réglé de manière à être différent des codages d'émoticônes dans les outils de chat existants, en définissant un nouvel ensemble de champs d'émoticônes et en établissant un nouvel ensemble de correspondance entre l'émoticône et le codage de l'émoticône pour définir un octet de début de marqueur ; et
de transmettre (203) les informations de codage des informations d'instruction supplémentaires au deuxième dispositif mobile.

2. Procédé de communication pour dispositifs mobiles selon la revendication 1, **caractérisé en ce que** la demande (202) de la première correspondance pré-stockée entre des informations d'instruction supplémentaires et des informations de codage d'informations d'instruction supplémentaires comprend le fait :
de demander localement une première correspondance pré-stockée entre des informations d'instruction supplémentaires et des informations de codage d'informations d'instruction supplémentaires, pour obtenir les informations de codage auxquelles les informations d'instruction supplémentaires correspondent, ou
de demander à un premier serveur une première correspondance pré-stockée entre des informations d'instruction supplémentaires et des informations de codage d'informations d'instruction supplémentaires, pour obtenir les informations de codage auxquelles les informations d'instruction supplémentaires correspondent.

3. Procédé de communication pour dispositifs mobiles selon l'une quelconque des revendications 1 et 2, **caractérisé en ce qu'**après la transmission des informations d'instruction supplémentaires au deuxième dispositif mobile, le procédé de communication comprend en outre les étapes consistant :
à recevoir, par le deuxième dispositif mobile, les informations de codage des informations d'instruction supplémentaires ;
à demander, par le deuxième dispositif mobile, une deuxième correspondance pré-stockée entre les informations d'instruction supplémentaires et les informations de codage d'informations d'instruction supplémentaires, pour obtenir les informations de codage auxquelles les informations d'instruction supplémentaires correspondent ; et
à reconnaître, par le deuxième dispositif mobile, les informations d'instruction supplémentaires pour notifier en outre un deuxième utilisateur du deuxième dispositif mobile de la première opération d'utilisateur.

4. Procédé de communication pour dispositifs mobiles selon la revendication 3, **caractérisé en ce que** la demande, par le deuxième dispositif mobile, d'une deuxième correspondance pré-stockée entre des informations d'instruction supplémentaires et des informations de codage d'informations d'instruction supplémentaires, pour obtenir les informations de codage auxquelles les informations d'instruction supplémentaires correspondent comprend le fait :
de demander localement, par le deuxième dispositif mobile, la deuxième correspondance pré-stockée entre des informations d'instruction supplémentaires et des informations de codage d'informations d'instruction supplémentaires, pour obtenir les informations de codage auxquelles les informations d'instruction supplémentaires correspondent, ou
de demander, par le deuxième dispositif mobile, à un deuxième serveur la deuxième correspondance pré-stockée entre des informations d'instruction supplémentaires et des informations de codage d'informations d'instruction supplémentaires, pour obtenir les informations de codage auxquelles les informations d'instruction supplémentaires correspondent.

5. Procédé de communication pour dispositifs mobiles selon l'une quelconque des revendications 1 à 4, **caractérisé en ce que** l'opération en une étape sur le premier dispositif mobile comprend :
une opération en une étape sur un écran du premier dispositif mobile, ou
une opération en une étape sur le premier dispositif mobile lui-même.

6. Appareil de communication pour dispositifs mobiles, **caractérisé en ce qu'**il comprend :
un module d'acquisition (301) pour obtenir des informations d'instruction supplémentaires qui correspondent à une première opération d'utilisateur au cours d'une communication en détectant la première opération d'utilisateur ; la première opération d'utilisateur comprenant au moins l'une d'une opération à commande vocale ou d'une opération en une étape sur un premier dispositif mobile ; et
un module de transmission (302) pour transmettre les informations d'instruction supplémentaires à un deuxième dispositif mobile de sorte que le deuxième dispositif mobile reconnaisse les informations d'instruction supplémentaires pour notifier en outre un deuxième utilisateur du deuxième dispositif mobile de la première opération d'utilisateur, après obtention du module d'acquisition des informations d'instruction supplémentaires qui correspondent à la première opération d'utilisateur ;
dans lequel le module de transmission (302) comprend :
une première unité d'interrogation pour demander une première correspondance pré-stockée entre les informations d'instruction supplémentaires et des informations de codage d'informations d'instruction supplémentaires, pour obtenir les informations de codage auxquelles les informations d'instruction supplémentaires correspondent, où, lorsque les informations d'instruction supplémentaires représentent une émoticône, le codage de l'émoticône est réglé de manière à être différent des codages d'émoticônes dans les outils de chat existants, en définissant un nouvel ensemble de champs d'émoticônes et, en établissant un nouvel ensemble de correspondance entre l'émoticône et le codage de l'émoticône pour définir un octet de début de marqueur ; et
une unité de transmission pour transmettre les informations de codage des informations d'instruction supplémentaires au deuxième dispositif mobile, de manière à amener un deuxième dispositif mobile : à recevoir les informations de codage des informations d'instruction supplémentaires, à demander une deuxième correspondance pré-stockée entre des informations d'instruction supplémentaires et des informations de codage d'informations d'instruction supplémentaires, pour obtenir les informations de codage auxquelles les informations d'instruction supplémentaires correspondent ; et à reconnaître les informations d'instruction supplémentaires pour notifier en outre un deuxième utilisateur du deuxième dispositif mobile de la première opération d'utilisateur.

7. Appareil de communication pour dispositifs mobiles selon la revendication 6, **caractérisé en ce que** la première unité d'interrogation est en outre configurée :
pour demander localement la première correspondance pré-stockée entre les informations d'instruction supplémentaires et des informations de codage des informations d'instruction supplémentaires, pour obtenir les informations de codage auxquelles les informations d'instruction supplémentaires correspondent, ou
pour demander à un premier serveur la première correspondance pré-stockée entre des informations d'instruction supplémentaires et des informations de codage d'informations d'instruction supplémentaires, pour obtenir les informations de codage auxquelles les informations d'instruction supplémentaires correspondent.

8. Appareil de communication pour dispositifs mobiles selon l'une quelconque des revendications 6 et 7, **caractérisé en ce que** l'opération en une étape sur le premier dispositif mobile comprend :
une opération en une étape sur un écran du premier dispositif mobile, ou
une opération en une étape sur le premier dispositif mobile lui-même.

9. Support d'enregistrement lisible par un ordinateur et sur lequel est enregistré un programme informatique comportant des instructions pour exécuter les étapes du procédé de communication pour dispositifs mobiles selon l'une quelconque des revendications 1 à 5.
